# EUROPÄISCHE PATENTSCHRIFT

(11) **EP 2 425 962 B1**
(45) Veröffentlichungstag und Bekanntmachung des Hinweises auf die Patenterteilung: **30.04.2014**
(21) Anmeldenummer: 11177699.3
(22) Anmeldetag: 16.08.2011
(51) Int. Cl.: B29C 35/16, B29C 73/30, B30B 15/06, H05B 3/12, B29C 35/02

(54) **Heizelement für eine Vulkanisierpresse mit nanoporöser Isolierschicht und Verfahren unter deren Verwendung**
Heating element for a vulcanising press with nanoporous isolating layer and method using the same
Elément de chauffage pour une presse de vulcanisation dotée d'une couche isolante nanoporeuse et procédé utilisant ledit élément

(30) Priorität: 01.09.2010 DE 102010036104
(43) Veröffentlichungstag der Anmeldung: 07.03.2012
(73) Patentinhaber: MLT GmbH, 94315 Straubing (DE)
(72) Erfinder: Jakob, Edgar, 94315 Straubing (DE)
(74) Vertreter: Hannke, Christian

(56) Entgegenhaltungen:
- EP-A1- 0 011 114
- DE-A1-102007 002 594
- DE-B- 1 729 858
- NL-C- 111 172
- US-A- 3 969 051

## Beschreibung

Die Erfindung betrifft eine Vorrichtung zum Reparieren von Transportbändern und/oder Verbinden von Transportbandenden durch Vulkanisieren unter erhöhtem Druck mit einer Heiz- und Kühleinrichtung, welche mittels druckapplizierender Elemente erhöhtem Druck aussetzbar ist, wobei die Heiz- und Kühleinrichtung aus mehreren Schichten schichtartig aufgebaut ist und das Transportband oder die Transportbandenden in Breitenrichtung parallel zu den Schichten anordnenbar ist/sind und die Heiz- und Kühleinrichtung mindestens auf einer Seite des zu vulkanisieren Transportbandes und/oder der zu vulkanisieren Transportbandenden mindestens eine wärmeleitenden Schicht mit einer Kühleinrichtung, ein Heizelement und eine nanoporöse Isolierschicht umfasst.

Gurtförderer oder Förderbänder sind weit verbreitet und finden für zahlreiche Transportaufgaben in der Industrie, insbesondere im Bergbau, der Transporttechnik und im Lagerwesen Verwendung. Transportbänder zeichnen sich dabei durch eine besonders hohe Betriebssicherheit aus. Sie sind sehr ökonomisch und aufgrund ihres geringen Energieverbrauchs auch relativ umweltfreundlich. Weiterhin sind trotz der geringen Antriebsleistung große Förderlängen, Fördermengen und Fördergeschwindigkeiten möglich. Besonders attraktiv sind derartige Transportsysteme durch den geringen Verschleiß und die geringen Wartungs- und Investitionskosten. Diese machen Gurtförderer zu den Stetigförderern für Schüttgut mit dem besten Wirkungsgrad.

Gurtförderer sind sowohl für den Transport von Schüttgütern wie beispielsweise Erzen, Gestein, Abraum, Getreide, Kohle und vielen anderen als auch zum Transport von Stückgütern wie Paketen, Paletten, Getränkekisten und vielen anderen geeignet. Eine weitere verbreitete Anwendung für den Transport von Stückgütern mittels eines Transportbandes ist der Transport von Waren an einer Kasse.

Unter Bandförderer sollen im Folgenden auch Förderbänder, Gurtbandförderer oder Gurtförderer verstanden werden.

Bandförderer umfassen neben dem mindestens einen Transportband im Wesentlichen eine Tragkonstruktion, eine Vielzahl von Rollen mit unterschiedlichen Aufgaben (z.B. Tragrollen, Führungsrollen, Untergutrollen), einen Antrieb, Spannvorrichtungen, ggf. Umlenkeinrichtungen, Aufgabeeinrichtungen, Abgabeeinrichtungen (evtl. mit Abstreifern) und Sicherheitseinrichtungen.

Diese Sicherheitseinrichtungen dienen vor allem der Überwachung von Drehzahl und Schieflage des Transportbandes. Weiterhin umfassen die Sicherheitseinrichtungen Möglichkeiten (z.B. in Form einer Reißleine) zur sofortigen Herabsetzung der Drehzahl auf null im Falle eines Defekts oder einer Gefahr für das Bedienpersonal.

Bei den in derartigen Bandförderern verwendeten Transportbändern handelt es sich meist um einlagige oder mehrlagige Textilgurte oder um Stahlseilgurte. Bei der Erstmontage eines solchen Textilgurtes müssen die Transportbandenden miteinander dauerhaft verbunden werden, um ein zyklisches Band zu erhalten. Dies erfolgt nach dem Stand der Technik thermisch unter Ausübung von Druck, beispielsweise durch Vulkanisieren.

Auch wenn Transportbänder verhältnismäßig Wartungsarm sind, kann es zu Beschädigungen kommen, welche oft ebenfalls mittels des oben genannten Vulkanisierverfahrens repariert werden. Dazu wird entweder die beschädigte Stelle aus dem Band herausgeschnitten und ein neues Stück analog dem Verfahren zum Verbinden von Transportbandenden eingesetzt. Weiterhin ist es auch möglich, dass bei nur geringen Beschädigungen lokal eine Oberflächenbehandlung vorgenommen wird, bei der ebenfalls durch Vulkanisierung ein neues Oberflächenmaterial (eine Art Flicken) auf die beschädigte Stelle aufgebracht wird.

Für diese Vulkanisierung werden große Vulkanisierpressen verwendet, die in der Lage sind, die notwendigen Temperaturen und die notwendigen hohen Drücke auf das Transportband aufzubringen. Oft sind derartige Geräte auch mit einer Kühlung verbunden, um nach erfolgter Vulkanisierung das Band noch unter Druck möglichst schnell abkühlen zu können und so ein möglichst schnelles Wiederanlaufen und somit möglichst kurze Standzeiten des Transportbandes realisieren zu können. Die dazu nach dem Stand der Technik verwendeten Geräte sind sehr groß und sehr schwer. Dies ist notwendig, um über die gesamte Breite des Transportbandes die nötige Hitze und den nötigen Druck generieren zu können. Auch eine integrierte Wasserkühlung beansprucht viel Raum, wodurch eine derartige Vulkanisierpresse weiter vergrößert und erschwert wird. US 3 969 051 A offenbart eine Vorrichtung gemäß dem Oberbegrift des Anspruchs 1 und ein Verfahren gemäß dem Oberbegriff des Anspruchs 11.

Da zwischen der Tragkonstruktion und dem Transportband in der Regel nur ein eingeschränktes Raumangebot besteht, ist es wünschenswert, derartige Vulkanisierpressen möglichst raumsparend auszuführen. Insbesondere eine möglichst geringe Gesamthöhe der Vulkanisierpressen ist vorteilhaft, da sie so besonders einfach in den schmalen Zwischenraum zwischen dem Transportband und der Tragkonstruktion eingeführt werden kann.

Insbesondere die Isolierung der Vulkanisierpressen ist sehr voluminös. Aufgabe der Erfindung ist es daher, die Gesamthöhe einer Vorrichtung zum Reparieren von Transportbändern und/oder Verbinden von Transportbandenden durch Vulkanisieren unter erhöhtem Druck mit einer Heiz- und Kühleinrichtung zu reduzieren. Insbesondere durch eine Verbesserung der Isolation.

Diese Aufgabe wird mittels einer Vorrichtung zum Reparieren von Transportbändern und/oder Verbinden von Transportbandenden durch Vulkanisieren unter erhöhtem Druck mit einer Heiz- und Kühleinrichtung gelöst, welche die Merkmale des Patentanspruches 1 aufweist, und durch ein Verfahren, welches die Merkmale des Patentanspruchs 11 aufweist.

Ein wesentlicher Gegenstand der Erfindung besteht in einer Vorrichtung zum Reparieren von Transportbändern und/oder Verbinden von Transportbandenden durch Vulkanisieren unter erhöhtem Druck mit einer Heiz- und Kühleinrichtung, welche mittels druckapplizierender Elemente erhöhtem Druck aussetzbar ist, wobei die Heiz- und Kühleinrichtung aus mehreren Schichten schichtartig aufgebaut ist und das Transportband oder die Transportbandenden in Breitenrichtung parallel zu den Schichten anordnenbar ist/sind und die Heiz- und Kühleinrichtung mindestens auf einer Seite des zu vulkanisieren Transportbandes und/oder der zu vulkanisieren Transportbandenden mindestens eine wärmeleitenden Schicht mit einer Kühleinrichtung, ein Heizelement und eine nanoporöse Isolierschicht umfasst.

Durch eine derartige Vorrichtung ist es möglich, die schichtartig stapelbaren Elemente einzeln zu bewegen und erst an der Einsatzstelle zu der Vulkanisierpresse zusammenzufügen. Weiterhin ist es möglich, dass einzelne Schichten, also Elemente, die eine gewünschte Funktion aufweisen, modular gegen andere Elemente mit veränderten Eigenschaften austauschbar sind, und so die Vulkanisierpresse an die jeweiligen Bedingungen individuell anpassbar ist.

Insbesondere die Isolationsschicht beansprucht viel Platz und hat einen großen Anteil an der Gesamthöhe einer Vulkanisierpresse Es hat sich jedoch überraschenderweise herausgestellt, dass nanoporöse Isolierschichten besonders gut geeignet sind, um auch bei den innerhalb einer Vulkanisierpresse vorliegenden hohen Drücken besonders gute Isolationseigenschaften zu zeigen. Somit können Vulkanisierpressen, die derartige nanoporöse Isoliermaterialien umfassen, bei gleicher Heizleistung und vergleichbarer Isolation deutlich niedrigere Bauhöhen aufweisen.

Als besonders geeignet haben sich diesbezüglich nanoporöse Isolierschichten herausgestellt, die ein Aerogel und/oder ein aerogelenthaltendes Material umfassen. Die nanoporöse Isolierschicht umfasst daher ein Aerogel und/oder ein aerogelenthaltendes Material. Aerogele zeichnen sich durch eine besonders geringe Wärmeleitfähigkeit aus. Diese beruht vornehmlich auf der hohen Porosität der Aerogele. Die Porosität liegt bevorzugt bei über 80% und die spezifische Oberfläche bei bevorzugt über 100 m²/g. Die Rohdichte der verwendeten Aerogele liegt bevorzugt bei weniger als 500 kg/m³.

In der Praxis hat sich jedoch gezeigt, dass es wesentlich einfacher ist, das Aerogel als ein aerogelenthaltendes Material zu verwenden. Dadurch wird die Handhabbarkeit sehr verbessert, ohne die wärmedämmenden Eigenschaften gravierend zu beeinflussen. Als besonders geeignet haben sich aerogelenthaltende Fliese erwiesen. In einer besonders bevorzugten Ausführungsform umfasst in einer Vorrichtung zum Reparieren von Transportbändern und/oder Verbinden von Transportbandenden daher die nanoporöse Isolierschicht ein aerogelenthaltendes Flies. Derartige Fliese sind verhältnismäßig günstig auf dem Markt erhältlich. Sie werden in Form langer Bahnen gehandelt. Beispielsweise ist ein derartiges nanoporöses aerogelenthaltendes Flies unter dem Markennamen Spaceloft^{®} von Aspen Aerogels^{®} erhältlich.

Um die verhältnismäßig teuren und anfälligen Aerogele und/oder aerogelenthaltenden Materialien nicht unnötig erhöhten Belastungen auszusetzen ist in einer bevorzugten Ausführungsform vorgesehen, die Aerogele und/oder aerogelenthaltenden Materialien der Isolierschicht durch eine weitere Isolierende Schutzschicht abzudecken. In dieser bevorzugten Ausführungsform der Vorrichtung zum Reparieren von Transportbändern und/oder Verbinden von Transportbandenden umfasst die schichtartig aufgebaute Heiz- und Kühleinrichtung daher weiterhin eine Isolierschicht aus einem hitzebeständigen Kunststoff. Bei diesem Kunststoff kann es sich beispielsweise um hitzebeständige Gummimatten handeln. Z.B. können statistische Copolymere mit gesättigtem Polymergerüst wie Ethylen-Propylen-DienKautschuk (EPDM) verwendet werden. Jedoch ist die Erfindung nicht auf die Verwendung derartiger Kunststoffe beschränkt. Es kann vielmehr jeder geeignete Kunststoff verwendet werden, der die erforderliche Hitze- und Druckbeständigkeit aufweist.

Wie bereits oben erwähnt ist es in vielen Fällen vorteilhaft, wenn bei einer Vulkanisierpresse die Möglichkeit besteht, das reparierte Transportband oder die verbundenen Transportbandenden nach dem Vulkanisieren schnell abzukühlen. Dadurch kann der Gurtförderer deutlich früher (wieder) in Betrieb genommen werden. Der sonst übliche über mehrere Stunden verlaufende Abkühlvorgang kann erheblich verkürzt werden. Dafür hat es sich als besonders günstig herausgestellt, die Kühlung in unmittelbarer Nähe zu dem reparierten Transportband oder den verbundenen Transportbandenden vorzunehmen. Daher ist in einer bevorzugten Ausführungsform der Vorrichtung zum Reparieren von Transportbändern und/oder Verbinden von Transportbandenden die wärmeleitende Schicht aus einem wärmeleitfähigen Metall und weist Kanäle und Anschlüsse für eine Wasserkühlung auf.

Die Ausführung aus einem wärmeleitfähigen Material ist für einen schnellen Übertrag der thermischen Energie des Transportbandes an das Kühlmedium vorteilhaft, sondern dient auch dazu, dass so das Kühlelement zwischen Heizelement und Transportband angeordnet sein kann und so das Transportband besonders schnell abgekühlt werden kann. Als besonders geeignet hat sich Aluminium als Material für das wärmeleitfähige Kühlelement herausgestellt. Es könnte hierfür jedoch jedes weitere Material verwendet werden, dass die erwünschten Eigenschaften aufweist. Insbesondere können verschiedene Metalle und Legierungen verwendet werden. Aluminium bietet jedoch zusätzlich den Vorteil, dass es im Vergleich zu anderen Metallen eine verhältnismäßig geringe Dichte aufweist. Das Heizelement kann sich bei dieser Ausführungsform auf der dem Transportband abgewandten Seite des Kühlelements befinden, welches jedoch die Hitze aufgrund der wärmeleitfähigen Ausführung schnell an das Transportband weiterleitet.

Die Kanäle zum Führen des Kühlwassers können als Rohre im Inneren des Kühlelements ausgeführt sein. Als besonders einfach und Effizient hat sich jedoch erwiesen, die Kanäle oberflächlich in das wärmeleitfähige Material einzubringen. Beispielsweise können die Kanäle aus dem Material ausgefräst werden. Im Vergleich zu innenliegenden Rohren kann so die Höhe des Kühlelements nochmals verringert werden. Zur Abdichtung der zunächst einseitig offenen Kanäle gegenüber der anschließenden Schicht ist es sinnvoll, eine Dichtungsschicht zwischen dem Kühlelement und der angrenzenden Schicht einzusetzen. Da die angrenzende Schicht auch das Heizelement umfassen kann, ist es vorteilhaft ein hitzebeständiges und möglichst auch wärmeleitfähiges Dichtungsmaterial zu verwenden. Als besonders vorteilhaft haben sich dafür thermisch belastbare Fluorelastomere erwiesen.

In einer bevorzugten Ausführungsform der Vorrichtung zum Reparieren von Transportbändern und/oder Verbinden von Transportbandenden ist die Dichtung deshalb aus einem thermisch belastbaren Fluorelastomer. Grundsätzlich können auch Dichtungen aus anderen Materialien, die die gewünschten Eigenschaften zeigen verwendet werden, jedoch haben sich die thermisch belastbaren Fluorelastomere als besonders geeignet erwiesen. Ein Beispiel für derartige thermisch belastbare Fluorelastomere ist Viton^{®} von DuPont^{®}.

Durch den Einsatz der nanoporösen Isolierschicht in Verbindung mit den weiteren erwähnten Elementen in besonders dünner Ausführung ist es möglich, die Vulkanisierpresse besonders dünn auszuführen. In einer besonders bevorzugten Ausführungsform der Vorrichtung zum Reparieren von Transportbändern und/oder Verbinden von Transportbandenden weist die Heiz- und Kühleinrichtung auf der Seite des zu vulkanisieren Transportbandes und/oder der zu vulkanisieren Transportbandenden welche die Kühleinrichtung, eine Dichtung, das Heizelement und die nanoporöse Isolierschicht umfasst eine Dicke von weniger als Dicke von weniger als 50 mm, bevorzugt von weniger als 30 mm, besonders bevorzugt weniger als 25 mm auf.

Trotz der möglichst dünnen Ausführung der einzelnen Schichten müssen diese Schichten auch den erforderlichen Anpressdrücken standhalten. Je nach Anforderungen an das Transportband variieren die Anpressdrücke stark. Prinzipiell lassen sich mit der erfindungsgemäßen Vulkanisierpresse auch geringe Drücke von weniger als 10 bar realisieren. Trotzdem sind die einzelnen Elemente der Heiz- und Kühleinrichtung möglichst auch für höhere Betriebsdrücke ausgelegt. In einer bevorzugten Ausführungsform der Vorrichtung zum Reparieren von Transportbändern und/oder Verbinden von Transportbandenden ist die Heiz- und Kühleinrichtung mit Drücken von >10 bar, bevorzugt >15 bar, besonders bevorzugt >20 bar beaufschlagbar. Üblicherweise werden Betriebsdrücke bis etwa 15 bar verwendet, dies stellt jedoch nicht zwangsläufig die obere Grenze für die Belastbarkeit der einzelnen Elemente dar.

Ein weiteres wichtiges Qualitätskriterium für Vulkanisierpressen ist eine hohe Betriebstemperatur, die sich möglichst gleichmäßig über die gesamte Arbeitsfläche verteilen sollte. Die gleichmäßige Temperaturverteilung wird durch sehr flache über eine große Fläche heizende Heizelemente erreicht. Dies können beispielsweise flächig verlegte Heizwiderstände oder eine Folienheizung sein. Dadurch, dass das wärmeleitende Kühlelement zwischen dem Heizelement und dem Transportband angeordnet sein kann, werden eventuelle Temperaturunterschiede ausgeglichen und das Transportband wird über die gesamte Kontaktfläche mit der Vulkanisierpresse mit einer nahezu gleichen Temperatur beaufschlagt. Die Heizeinrichtung ist dabei in der Lage, derart hohe Temperaturen zu erzeugen, sodass auch auf der dem Heizelement gegenüberliegenden Seite des Kühlelements die zum Vulkanisieren notwendige Temperatur vorliegt. In einer bevorzugten Ausführungsform der Vorrichtung zum Reparieren von Transportbändern und/oder Verbinden von Transportbandenden ist daher die Heiz- und Kühleinrichtung an einer Kontaktstelle zu dem Transportband und/oder den Transportbandenden auf eine Temperatur >150°C, bevorzugt >180°C, besonders bevorzugt >200°C beheizbar.

Durch die unterschiedlichen Temperaturen und deren genaue Einstellbarkeit ist es möglich verschiedene Transportbandmaterialien jeweils bei deren optimaler Bearbeitungstemperatur zu bearbeiten. Die gewünschte Temperatur kann beispielsweise mittels eines Temperaturreglers eingestellt werden. Insbesondere in Kombination mit verschiedenen Drücken ist so eine große Anzahl von Transportbandmaterialien bearbeitbar. In einer bevorzugten Ausführungsform der Vorrichtung zum Reparieren von Transportbändern und/oder Verbinden von Transportbandenden ist die Vorrichtung mindestens zum Reparieren und/oder Verbinden von einlagigen Textilgurten, mehrlagigen Textilgurten und/oder Stahlseilgurten geeignet.

Ein weiterer wesentlicher Aspekt der Erfindung ist ein Verfahren zum Reparieren von Transportbändern und/oder Verbinden von Transportbandenden unter Verwendung einer Vorrichtung zum Reparieren von Transportbändern und/oder Verbinden von Transportbandenden durch Vulkanisieren unter erhöhtem Druck mit einer Heiz- und Kühleinrichtung, welche mittels druckapplizierender Elemente erhöhtem Druck aussetzbar ist, wobei die Heiz- und Kühleinrichtung aus mehreren Schichten schichtartig aufgebaut ist und das Transportband oder die Transportbandenden in Breitenrichtung parallel zu den Schichten anordnenbar ist/sind und die Heiz- und Kühleinrichtung mindestens auf einer Seite des zu vulkanisieren Transportbandes und/oder der zu vulkanisieren Transportbandenden mindestens eine wärmeleitenden Schicht mit einer Kühleinrichtung, ein Heizelement und eine nanoporöse Isolierschicht umfasst. Dabei kann die Vorrichtung zum Reparieren von Transportbändern und/oder Verbinden von Transportbandenden auch in den oben beschriebenen bevorzugten Ausführungsformen vorliegen.

Mit diesem Verfahren kann die oben beschriebene Vorrichtung zum Reparieren von Transportbändern und/oder Verbinden von Transportbandenden mit der geringen Bauhöhe auch zum Reparieren von Transportbändern und/oder Verbinden von Transportbandenden eingesetzt werden. Es ist daher mit diesem Verfahren auch möglich, an schwer zugänglichen Stellen, an denen nur vergleichsweise wenig Platz zwischen Tragkonstruktion und dem Transportband eines Gurtförderers besteht, Reparaturen an Transportbändern und/oder das Verbinden von Transportbandenden durchzuführen.

Optional ist es auch möglich einzelne Elemente der schichtartig aufgebauten Heiz- und Kühleinrichtung zu Modulen zusammenzufassen. Dazu können die entsprechenden Elemente miteinander verbunden werden. Beispielsweise könnte dies durch Verschrauben, Verkleben, Vernieten oder jedes andere geeignete Verfahren erfolgen. Dies vereinfacht vor allem den Zusammenbau der Vulkanisierpresse vor Ort. Ebenso werden Montagefahler vermieden, da die Reihenfolge der Elemente zumindest innerhalb eines Moduls bereits durch die feste Verbindung vorgegeben ist. Ein weiterer Vorteil kann sich daraus ergeben, dass besonders empfindliche Elemente besonders dünn ausgebildet sein können, da eventuelle separate Schutzummantelungen nicht mehr notwendig sein. Insbesondere kann es vorteilhaft sein, Kühl- und Heizelement miteinander zu verbinden. Dies ist besonders dann vorteilhaft, wenn das Kühlelement selbst mehrteilig ausgebildet ist und aus einem ersten (unteren) Teil, in den auf einer Oberfläche Kanäle zum durchleiten eines Kühlmittels eingefügt sind, einer Dichtung und einem zweiten (oberen) Teil, nämlich einer Abdeckung der Kanäle aufgebaut ist. Durch eine Verbindung dieser Elemente zu einem einzigen Modul, optional in Kombination mit dem Heizelement, vereinfacht den Zusammenbau drastisch.

Eine weitere besonders geeignete Kombination einzelner Elemente zu einem Modul besteht in einer Kombination aus Heizelement und Isolierschicht. Da die Isolierschicht den Druckerzeugungseinrichtungen besonders nahe kommt und auf diese daher besonders ungleichmäßige Drücke wirken, welche aus Verformungen (insbesondere Wölbungen/Verbiegungen der lediglich seitlich gegenüber einander gesicherten Druckerzeugungsmittel) resultieren, ist die Isolierschicht besonderen Beanspruchungen und Verformungen ausgesetzt. Daher müssen nach dem Stand der Technik verhältnismäßig voluminöse Ausgleichselemente zwischen Isolierschicht und Heizelement eingefügt werden. Trotzdem kommt es beispielsweise durch Verschmutzungen immer wieder vor, dass das Heizelement ungleichmäßig druckbeaufschlagt wird und es zu Beschädigungen kommt. Eine dauerhafte Verbindung von Heizelement und Isolierschicht beugt diesen Verunreinigungen vor.

Weitere Vorteile, Ziele und Eigenschaften vorliegender Erfindung werden anhand nachfolgender Beschreibung anliegender Figuren erläutert, in welcher beispielhaft eine erfindungsgemäße Vorrichtung zum Reparieren von Transportbändern und/oder Verbinden von Transportbandenden durch Vulkanisieren unter erhöhtem Druck mit einer Heiz- und Kühleinrichtung dargestellt ist, welche mittels druckapplizierender Elemente erhöhtem Druck aussetzbar ist, wobei die Heiz- und Kühleinrichtung aus mehreren Schichten schichtartig aufgebaut ist und das Transportband oder die Transportbandenden in Breitenrichtung parallel zu den Schichten anordnenbar ist/sind und die Heiz- und Kühleinrichtung mindestens auf einer Seite des zu vulkanisieren Transportbandes und/oder der zu vulkanisieren Transportbandenden mindestens eine wärmeleitenden Schicht mit einer Kühleinrichtung, ein Heizelement und eine nanoporöse Isolierschicht umfasst. Bauteile der Vorrichtung zum Reparieren von Transportbändern und/oder Verbinden von Transportbandenden welche in den Figuren wenigstens im Wesentlichen hinsichtlich ihrer Funktion übereinstimmen, können hierbei mit gleichen Bezugsziffern gekennzeichnet sein, wobei diese Bauteile nicht in allen Figuren beziffert und erläutert sein müssen.

Es zeigen:
- Fig. 1:: eine Ansicht von schräg oben auf eine erste Einrichtung zum Druckbeaufschlagen der Heiz- und Kühleinrichtung der Vorrichtung zum Reparieren von Transportbändern und/oder Verbinden von Transportbandenden;
- Fig. 2:: eine Ansicht von schräg oben auf eine teilweise montierte Vulkanisierpresse mit einer einem hydraulischen Druckkissen, welche auf der ersten Einrichtung zum Druckbeaufschlagen angeordnet ist;
- Fig. 3:: eine Ansicht von schräg oben auf eine teilweise montierte Vulkanisierpresse mit einer ersten Isolierschicht, welche auf der Kühleinrichtung angeordnet ist;
- Fig. 4:: eine Ansicht von schräg oben auf eine teilweise montierte Vulkanisierpresse mit einem ersten Heizelement, welches auf der ersten Isolierschicht angeordnet ist;
- Fig. 5:: eine Ansicht von schräg oben auf eine teilweise montierte Vulkanisierpresse mit einer unteren Druckplatte, einem Transportband und Keilen, welche auf dem ersten Heizelement angeordnet sind;
- Fig. 6:: eine Ansicht von schräg oben auf eine teilweise montierte Vulkanisierpresse mit einer oberen Druckplatte, welches oberhalb des Transportbandes und der Keile angeordnet ist;
- Fig. 7:: eine Ansicht von schräg oben auf eine teilweise montierte Vulkanisierpresse mit einem zweiten Heizelement, welches parallel zu dem ersten Heizelement auf der oberen Druckplatte angeordnet ist;
- Fig. 8:: eine Ansicht von schräg oben auf eine teilweise montierte Vulkanisierpresse mit einer zweiten Isolierschicht, welche auf dem zweiten Heizelement angeordnet ist;
- Fig. 9:: eine Ansicht von schräg oben auf eine vollständig montierte Vulkanisierpresse mit einer zweiten Einrichtung zum Druckbeaufschlagen, welche auf der zweiten Isolierschicht angeordnet ist und mittels Montagestangen und Zugbolzen mit der ersten Einrichtung zum Druckbeaufschlagen verschraubt ist;
- Fig. 10:: eine schematische Darstellung einer alternativen Anordnung der einzelnen Schichten in einer Heiz- und Kühleinrichtung.

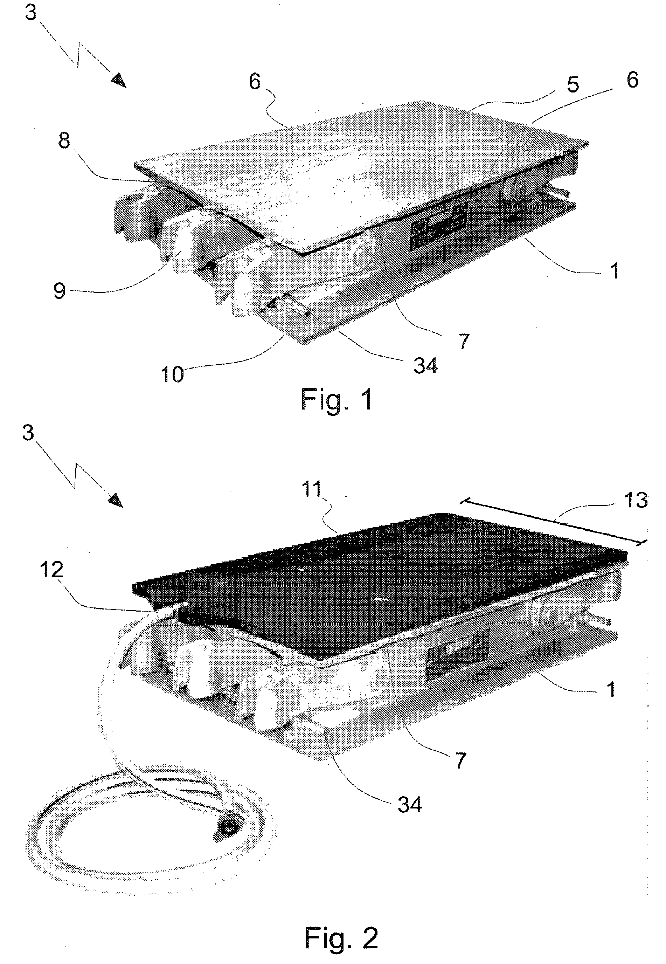

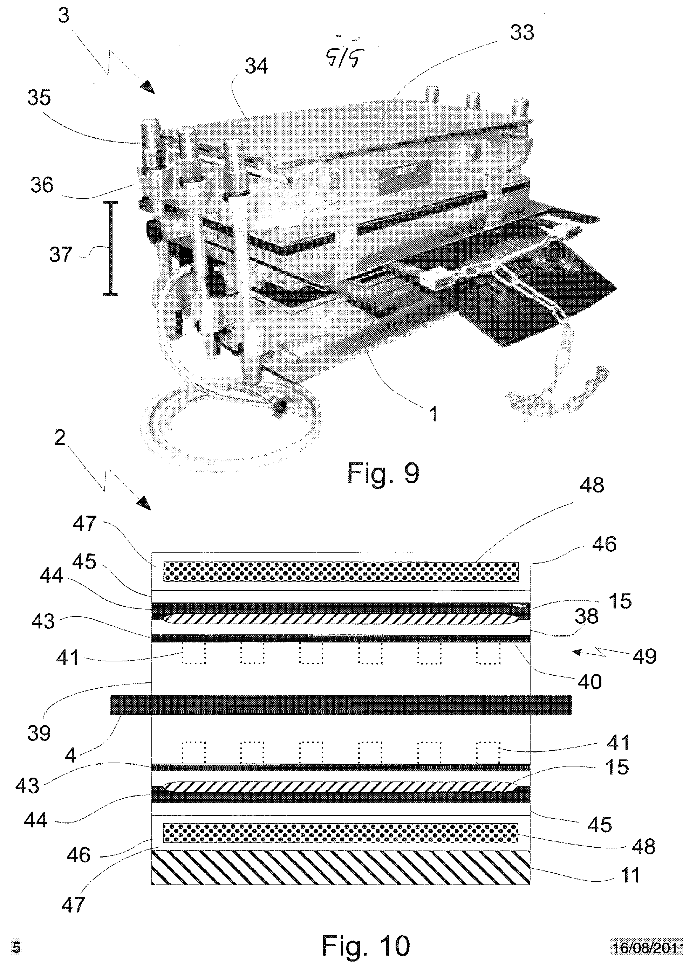

In Fig. 1 ist eine erste Einrichtung zum Druckbeaufschlagen 1 der Heiz- und Kühleinrichtung 2 der Vorrichtung 3 zum Reparieren von Transportbändern 4 und/oder Verbinden von Transportbandenden gezeigt. Die gezeigte Einrichtung zum Druckbeaufschlagen 1 weist oberseitig eine ebene Fläche 5 auf, auf der weitere Elemente der schichtartig aufgebauten Vulkanisierpresse angeordnet werden können. Die längeren Kanten 6 der Ebene 5 weisen Aussparungen 7 auf, in welche komplementäre Führungselemente des Heizelements eingesetzt werden können. Auf beiden kürzeren Seiten 8 der gezeigten Einrichtung zum Druckbeaufschlagen 1 sind Montagestangen 34 zu erkennen, welche die einzelnen Elemente der Einrichtung zum Druckbeaufschlagen 1 verbinden. Außerdem stehen Aufnahmeelemente 9 für nicht gezeigte und Zugbolzen seitlich über die obere Fläche 5 hinaus. Mittels dieser kann, wie in der Beschreibung der Fig. 9 ausführlich dargestellt, der notwendige Gegendruck erzeugt werden, welcher in Kombination mit dem im Druckkissen den gewünschten Druck auf die oberhalb der Einrichtung zum Druckbeaufschlagen 1 angeordneten Elemente der Heiz- und Kühleinrichtung 2 ausübt.

Unterseitig ist die gezeigte Einrichtung zum Druckbeaufschlagen 1 plan ausgeführt. Es wäre jedoch auch denkbar, dass die Unterseite 10 profiliert ausgebildet ist oder Füße aufweist. Mittels der Profile wäre beispielsweise der Transport mittels eines Gabelstaplers vereinfacht möglich. Füße, evtl. auch Teleskopfüße, könnten einen stabilen Stand auch in unebenem Gelände ermöglichen. Außerdem wären Verbindungselemente denkbar, mittels welcher die Vulkanisierpresse beispielsweise auf Böcken oder sonstigen Lagereinrichtungen fixiert werden könnte.

In Fig. 2 ist eine Ansicht von schräg oben auf eine teilweise montierte Vulkanisierpresse mit einem hydraulischen Druckkissen 11 gezeigt, welche auf der ersten Einrichtung zum Druckbeaufschlagen 1 angeordnet ist. Das hydraulische Druckkissen 11 weist einen Anschluss 12 zum Zu- und Abführen der Hydraulikflüssigkeit auf. Ober- und Unterseite des hydraulischen Druckkissens 11 sind planparallel ausgebildet, so dass sie als eine Schicht in der Vulkanisierpresse angeordnet werden kann. Insgesamt ist die Breite 13 des Druckkissens 11 etwas geringer als diejenige der Einrichtung zum Druckbeaufschlagen 1, so dass ein schmaler Rand der oberen Fläche 5 der Einrichtung zum Druckbeaufschlagen 1 über dem hydraulischen Druckkissen 11 übersteht. Dadurch wird ermöglicht, dass die zu den Aussparungen 7 in den Kanten 6 der oberen Fläche 5 der Einrichtung zum Druckbeaufschlagen 1 komplementären Führungselemente des Heizelements an dem hydraulischen Druckkissen 11 vorbeigeführt werden können und in die Aussparungen 7 eingesetzt werden können.

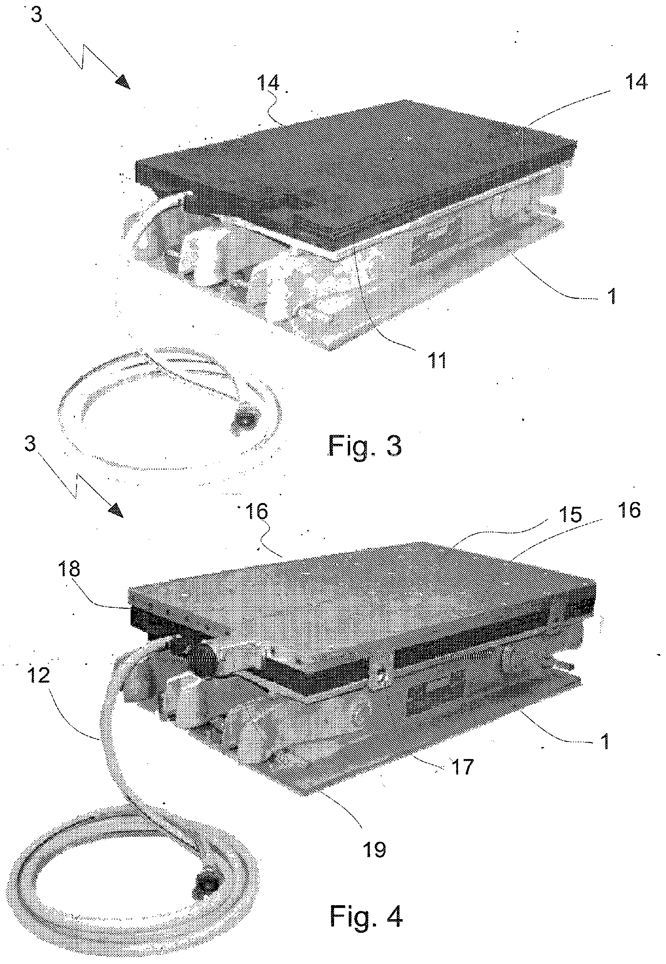

Fig. 3 zeigt eine Ansicht von schräg oben auf eine teilweise montierte Vulkanisierpresse mit einer ersten Isolierschicht 14, welche auf dem hydraulischen Druckkissen 11 angeordnet ist. Durch diese Isolierschicht 14 wird übermäßige Wärmeabfuhr von dem darauf zu platzierenden Heizelement zu dem hydraulischen Druckkissen 11 vermieden. Somit können die Wärmeverluste, die durch einen Wärmeabgabe von dem Heizelement in die dem Transportband 4 entgegengesetzte Richtung verursacht werden, minimiert werden. Die Isolierschicht 14schützt das Heizelement vor Beschädigungen durch starke Druckbeaufschlagungen durch das sonst angrenzende hydraulische Druckkissen 11. Bei der Isolierschicht 14 handelt es sich bevorzugt um eine Schicht, die ein nanoporöses Material umfasst. Dadurch lassen sich sehr geringe Schichtdicken bei gleichzeitig sehr guter Isolation erreichen.

Wie bereits bei der Beschreibung der Fig. 3 angedeutet wird oberhalb der Isolierschicht 14ein Heizelement 15 positioniert, in dem auch optional eine Kühleinrichtung integriert sein kann. Fig. 4 zeigt eine Ansicht von schräg oben auf eine teilweise montierte Vulkanisierpresse mit einem ersten Heizelement 15, welches auf der ersten Isolierschicht 11 angeordnet ist. Wie auch die bereits zuvor eingesetzten Elemente ist auch das Heizelement 15 als flaches schichtartiges Element mit planparallelen Oberflächen ausgebildet. An den Längsseiten 16 des ersten Heizelements 15 sind senkrecht abwärts vorstehende Führungselemente 17 angeordnet, die komplementär zu Aussparungen 7 in den längeren Kanten 6 der oberen Ebene 5 der Einrichtung zum Druckbeaufschlagen 1 ausgebildet sind. Diese Führungselemente 17 sind ausreichend stabil ausgebildet, um auch bei einer Druckbeaufschlagung ein Verrutschen der dazwischenliegenden Elemente zu vermeiden. Auf einer der kürzeren Seiten 18 des ersten Heizelements 15 ist ein Vorsprung angeordnet, welcher Einrichtungen zum Anschluss 19 des ersten Heizelements 15 aufweist. In dem gezeigten Beispiel handelt es sich bei dem Anschluss 19 um einen Stromanschluss. Die Wärme wird in diesem Beispiel somit direkt im Inneren des Heizelementes 15 erzeugt. Je nach Ausführungsform kann es sich bei diesem Anschluss 19 auch um einen ein Anschluss für ein Wärmeträgermedium handeln, falls die benötigte Wärme beispielsweise durch Zuführen eines extern aufgeheizten Fluids in das Innere der Vulkanisierpresse 3 gebracht wird. Ebenso können auch Kühlmittelanschlüsse vorhanden sein, durch welche im Fall der optionalen Kombination von Heiz- und Kühlelement, das Kühl mittel eingebracht werden kann.

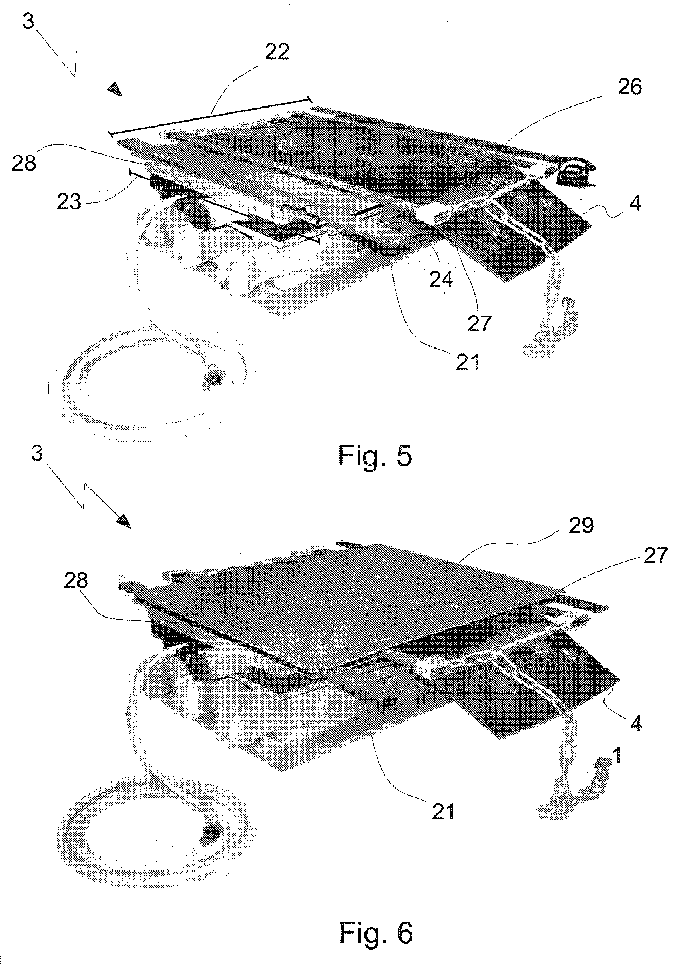

In Fig. 5 ist eine Ansicht von schräg oben auf eine teilweise montierte Vulkanisierpresse mit einer unteren Druckplatte 20, einem Transportband 4 und Keilen 21 gezeigt, welche auf dem ersten Heizelement 15 angeordnet sind. Die Druckplatte 20 ist vorteilhaft, um das Heizelement 15 vor Beschädigungen durch eventuelle Unebenheiten des Transportbandes 4 zu schützen. Ebenso dienen derartige Druckplatte dem Ausgleichen von Unebenheiten bei der parallelen Verwendung mehrerer Heizelemente 15 bzw. Vulkanisierpressen 3 nebeneinander. In dem gezeigten Beispiel handelt es sich um eine Aluminiumplatte, da Aluminium bei vergleichsweise geringem Gewicht sehr gute wärmeleitende Eigenschaften besitzt. Es sind hier jedoch auch andere Materialien möglich. Beispielsweise könnten flexiblere Metalle zum Einsatz kommen, die Unebenheiten besser ausgleichen können als Aluminium. Die Druckplatte 20 weist in etwa die selbe Länge 22 wie das Heizelement 15 auf, ist jedoch deutlich breiter 23, um das Transportband 4 noch bis in einen von dem Heizelement 15 beabstandeten Bereich 24 zu tragen.

Auf der Druckplatte 20 sind das Transportband 4 sowie Keile 21 positioniert. Die Keile 21 weisen in etwa die Stärke des Transportbandes 4 auf oder sind geringfügig dünner. Sie liegen senkrecht zu der Druckplatte 20 auf dieser, sind jedoch deutlich länger 25 als die Druckplatte 20 breit ist. Dadurch ist es möglich, dass das zwischen zwei Keilen 21 positionierte Transportband 4 jenseits der seitlichen Enden der Druckplatte 20 abwärts gekrümmt 26 wird, wohingegen die Keile 21 weiterhin horizontal verlaufen. Dadurch ergibt sich zwischen den Keilen 21 und oberhalb des Transportbandes 4 ein Freiraum in dem die Keile 21 mit einer Sicherung 27 gegeneinander gesichert werden können. Wie im gezeigten Beispiel kann dies durch Ketten erfolgen. Ebenso wären jedoch auch Zurrbänder oder ähnliches möglich. Diese Keile dienen dazu, ein Verformen bzw. seitliches Herausdrücken des während des Vulkanisiervorgangs erhitzten Gummimaterials des Transportbandes zu vermeiden. Weitere Keile 21 befinden sich senkrecht zu den Längsseiten des Heizelements 15 an dessen Enden 28. Diese dienen dazu, ein Verbiegen bzw. Verformen der einzelnen Elemente in diesem Bereich bei Druckbeaufschlagung zu vermeiden.

Fig. 6 zeigt eine Ansicht von schräg oben auf eine teilweise montierte Vulkanisierpresse mit einer oberen Druckplatte 29, welches oberhalb des Transportbandes 4 und der Keile 21 angeordnet ist. Wie bereits in der Beschreibung der Fig. 5 in Bezug auf die untere Druckplatte 20 erläutert, dient die obere Druckplatte 29 dem Schutz der darüber positionierten Elemente. Unebenheiten und Verformungen des Transportbandes 4 oder evtl. auf diesem verbliebene Reste von Transportgütern könnten sonst die empfindlicheren darüber positionierten Elemente bei den hohen Arbeitsdrücken beschädigen.

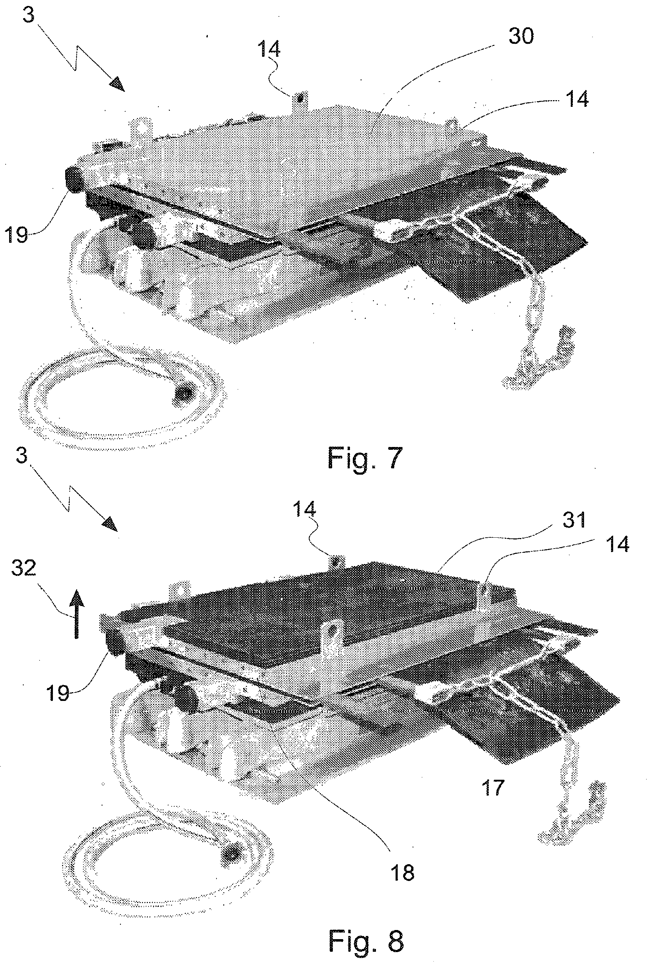

In Fig. 7 ist eine Ansicht von schräg oben auf eine teilweise montierte Vulkanisierpresse mit einem zweiten Heizelement 30 gezeigt, welches parallel zu dem ersten Heizelement 15 auf der oberen Druckplatte 29 angeordnet ist. Wie auch das erste Heizelement 15 weist auch das zweite Heizelement 30 auf einer seiner kürzeren Seiten 8 einen Vorsprung auf, welcher Einrichtungen zum Anschluss 19 des zweiten Heizelements 30 umfasst. Bevorzugt handelt es sich bei diesem Anschluss 19 um einen, mit dem dem zweiten Heizelement 30 der selbe Energieträger wie für das erste Heizelement 15 zugeführt werden kann. Im gezeigten Beispiel demnach ebenfalls ein Stromanschluss. Wie auch das erste Heizelement 15 weist auch das zweite Heizelement 30 vorstehende Führungselemente an den Längsseiten auf, welche senkrecht von diesem abstehen. Diejenigen des zweiten Heizelements 30 sind jedoch senkrecht aufwärts gerichtet, um die oberhalb angeordneten Elemente zu stabilisieren.

Fig. 8 zeigt eine Ansicht von schräg oben auf eine teilweise montierte Vulkanisierpresse mit einer zweiten Isolierschicht 31, welche auf dem zweiten Heizelement 30 angeordnet ist. Diese zweite Isolierschicht 31 dient überwiegend dazu, unnötige Wärmeverluste des Heizelements 30 in die dem Transportband 4 entgegengesetzte Richtung 32 zu vermeiden. Außerdem schützt es aber auch das Heizelement 30 vor Beschädigungen durch eine auf dieses aufgesetzte zweite Einrichtung zum Druckbeaufschlagen. Bei dieser Isolierschicht 31 handelt es sich bevorzugt um eine Schicht, die ein nanoporöses Material umfasst. Wie in dem gezeigten Beispiel kann dadurch eine sehr geringe Schichtdicke bei gleichzeitig sehr guter Isolation erreicht werden.

In Fig. 9 ist eine Ansicht von schräg oben auf eine vollständig montierte Vulkanisierpresse mit einer zweiten Einrichtung 33 zum Druckbeaufschlagen gezeigt, welche auf der zweiten Isolierschicht 31 angeordnet ist und mittels Zugbolzen mit der ersten Einrichtung zum Druckbeaufschlagen 1 verschraubt ist. Wie auch die erste Einrichtung zum Druckbeaufschlagen 1 besteht auch die zweite Einrichtung zum Druckbeaufschlagen 33 aus mehreren separaten Elementen, welche mittels Montagestangen 34 miteinander verbunden sind. Die zweite Einrichtung 33 zum Druckbeaufschlagen schließt die Vulkanisierpresse 3 nach oben hin ab. Wie auch die erste Einrichtung zum Druckbeaufschlagen 1 weist sie auf der dem Heizelement 30 zugewandten Seite eine ebene Fläche auf, an der entlang der Längsseite Aussparungen 7 angeordnet sind, in welche die dazu komplementären Führungselemente 17 des Heizelements 30 eingesetzt werden können. Auf beiden kürzeren Seiten 8 der zweiten Einrichtung 33 zum Druckbeaufschlagen stehen wie auch bei der ersten Einrichtung 1 Aufnahmeelemente 9 für Zugbolzen 35 über. Diese weisen runde Öffnung 36 auf, welche sich in Richtung der jeweils anderen Druckerzeugungseinrichtung 1, 33 erstreckt. In diese Öffnungen 36 können die Zugbolzen 35 eingesetzt und gegeneinander verschraubt werden. Durch die Länge der mittels der Zugbolzen 35 einstellbaren Distanz 37 zwischen der ersten 1 und zweiten 33 Druckerzeugungseinrichtung wird ein gewisser Vordruck auf die zwischen den Einrichtungen 1, 33 zum Druckbeaufschlagen angeordnete Elemente der Heiz- und Kühleinrichtung 2 ausgeübt. Der Arbeitsdruck, bei welchem die Vulkanisierung stattfindet wird jedoch nicht über die Zugbolzen 35 eingestellt, sondern über das hydraulische Druckkissen 11 aufgebracht. So kann der Druck leicht reguliert und an die jeweiligen Bedürfnisse angepasst werden.

Fig. 10 zeigt eine schematische Darstellung einer alternativen Anordnung der einzelnen Schichten in einer Vulkanisierpresse 3. In dieser Figur sind das Transportband 4 und die darüber und darunter befindlichen Elemente der Heiz- und Kühleinrichtung 2 dargestellt. Zur besseren Verständlichkeit sind jedoch nur die oberseitigen Elemente detailliert beschrieben. Die analoge Anordnung kann sich jedoch wie in der Figur gezeigt in entgegengesetzter Ausrichtung auch unterhalb des Transportbandes 4 befinden. Dabei können einige Elemente auch weggelassen werden, sofern diese für die spezielle Anwendung nicht benötigt werden. Oberhalb des Transportbandes 4 ist ein wärmeleitfähiges Kühlelement 49 angeordnet. Diese besteht aus einem oberen 38 und einem unteren 39 Teil. An der Oberseite 40 des unteren Teils sind Kanäle 41 ausgebildet, in die Kühlmedium eingebracht werden kann. Die zunächst nach oben hin offenen Kanäle 41 werden durch eine wärmeleitende Abdeckung 38 - den oberen Teil 38 des Kühlelements 49 verschlossen. Zwischen dem oberen 38 und dem unteren 39 Teil des Kühlelements 49 ist eine Dichtung 43 angeordnet. Wie bereits erwähnt, befindet sich eine entsprechende Anordnung in entgegengesetzter Ausrichtung unterhalb des Transportbandes 4.

An das obere Teil des Kühlelements 49 schließt sich oberseitig ein Heizelement 15 an. Bei dieser Anordnung ist leicht verständlich, dass es sich bei den für das Kühlelement 49 verwendeten Materialien um gut wärmeleitende Materialien handeln muss. Als ein sehr geeignetes Material hat sich Aluminium herausgestellt. Es ermöglicht (bei Abwesenheit des Kühlmittels in den Kanälen) einen guten Transport der Wärme zu dem Transportband 4. Gleichzeitig ist durch diese Anordnung eine besonders gleichmäßige Verteilung der Wärme über die gesamte Auflagefläche sichergestellt. Auch evtl. oberseitig ungleichmäßige Wärmebeaufschlagung wird während des Wärmetransports durch das Kühlelement 49 weitgehend ausgeglichen. Bei dem Heizelement 15 handelt es sich wie bereits in den vorherigen Figuren gezeigt um sehr flache Elemente. Bevorzugt werden Heizelemente 15, 30 verwendet, bei denen die Wärme durch elektrische Widerstände erzeugt wird, da derartige Elemente besonders dünn ausgeführt werden können.

Oberhalb des Heizelements 15 befindet sich eine Einrichtung 44, die einen Dickenausgleich zwischen dem Heizelement 15 und den oberhalb folgenden Elementen erlaubt. Beispielsweise kann es sich bei dem Material, das für diese Schicht verwendet wird, um das selbe Material handeln, wie es für die bereits beschriebene Dichtung 43 zwischen dem oberen 38 und dem unteren 39 Teil des Kühlelements 49 verwendet wird.

Oberhalb davon kann ich wie im gezeigten Beispiel eine weitere Aluminiumschicht 45 befinden. Daran schließt sich die Isolierschicht 46 an, die in dieser Figur in einer Schnittdarstellung gezeigt ist. Da der äußere Mantel 47 dieser Isolierschicht 46 besonders starken Belastungen ausgesetzt ist, wird für diesen ein strapazierfähiges Material verwendet. Es kann sich hierbei beispielsweise um hitzebeständige Kunststoffe z.B. EPDM oder Fluorelastomere wie z.B. Viton^{®} oder auch um glasfaserverstärkte Kunststoffe handeln. Dieses strapazierfähige Kunststoffmaterial ummantelt einen besonders wärmedämmenden Kern 48, welcher ein nanoporöses Material umfasst. Dabei ist es nicht notwendig, dass der äußere Mantel 47 der Isolierschicht 46 fest mit dem Kern 48 verbunden ist. Beispielsweise ist es möglich, dass der äußere Mantel 47 der Isolierschicht 46 eine Art Wanne bildet, in die das besonders wärmedämmenden Material des Kerns 48 eingefüllt wird und welche anschließend verschlossen wird. Dies kann insbesondere bei partikelförmigem Aerogel vorteilhaft sein. In dem gezeigten Beispiel ist im Inneren der Isolierschicht 46 ein aerogelenthaltendes Material, z.B. ein Spaceloft^{®}-Flies gezeigt. Durch diese spezielle Ausführungsform ist eine ausreichende Isolierung bereits bei sehr dünnen Isolierschichten 46 realisierbar.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1.: erste Einrichtung zum Druckbeaufschlagen
- 2.: Heiz- und Kühleinrichtung
- 3.: Vorrichtung zum Reparieren von Transportbändern und/oder Verbinden von Transportbandenden / Vulkanisierpresse
- 4.: Transportband
- 5.: Oberseitige Fläche
- 6.: längere Kante
- 7.: Aussparungen
- 8.: kürzere Seite der Einrichtung zum Druckbeaufschlagen
- 9.: Aufnahmeelement
- 10.: Unterseite
- 11.: hydraulisches Druckkissen
- 12.: Anschluss zum Zu- und Abführen der Hydraulikflüssigkeit
- 13.: Breite des hydraulisches Druckkissens
- 14.: erste Isolierschicht / Dichtungsschicht
- 15.: Heizelement
- 16.: Längsseite des Heizelements
- 17.: Führungselement
- 18.: kürzere Seite des Heizelements
- 19.: Anschluss des ersten Heizelements
- 20.: untere Druckplatte
- 21.: Keil
- 22.: Länge der Druckplatte
- 23.: Breite der Druckplatte
- 24.: von dem Heizelement beabstandeter Bereich
- 25.: Länge der Keile
- 26.: Abwärtskrümmung des Transportbandes
- 27.: Sicherung der Keile
- 28.: längsseitiges Ende des Heizelements
- 29.: obere Druckplatte
- 30.: zweites Heizelement
- 31.: zweite Isolierschicht
- 32.: dem Transportband entgegengesetzte Richtung
- 33.: zweite Einrichtung zum Druckbeaufschlagen
- 34.: Montagestange
- 35.: Zugbolzen
- 36.: runde Öffnung
- 37.: Distanz zwischen der ersten und zweiten Druckerzeugungseinrichtung
- 38.: oberer Teil des Kühlelements
- 39.: unterer Teil des Kühlelements
- 40.: Oberseite des unteren Teils des Kühlelements
- 41.: Kanal
- 42.: wärmeleitende Abdeckung
- 43.: Dichtung
- 44.: Einrichtung für Dickenausgleich
- 45.: Aluminiumschicht
- 46.: Isolierschicht
- 47.: äußerer Mantel der Isolierschicht
- 48.: besonders wärmedämmender Kern
- 49.: Kühlelement

## Patentansprüche

1. Vorrichtung (3) zum Reparieren von Transportbändern (4) und/oder Verbinden von Transportbandenden durch Vulkanisieren unter erhöhtem Druck mit einer Heiz- und Kühleinrichtung (2), welche mittels druckapplizierender Elemente erhöhtem Druck aussetzbar ist, wobei die Heiz- und Kühleinrichtung (2) aus mehreren Schichten schichtartig aufgebaut ist und das Transportband (4) oder die Transportbandenden in Breitenrichtung parallel zu den Schichten anordenbar ist/sind und die Heiz- und Kühleinrichtung (2) mindestens auf einer Seite das zu vulkanisierenden Transportbandes (4) und/oder der zu vulkanisierenden Transportbandenden mindestens eine wärmeleitende Schicht mit einem Kühlelement (49) und ein Heizelement (15) umfasst,
**dadurch gekennzeichnet, dass**
die Heiz- und Kühleinrichtung (2) mindestens auf einer Seite das zu vulkanisierenden Transportbandes (4) und/oder der zu vulkanisierenden Transportbandenden mindestens eine nanoporöse Isolierschicht (46) umfasst, die schichtartig aufgebaute Heiz- und Kühleinrichtung (2) weiterhin eine Isolierschicht umfasst, deren äußerer Mantel (47) ein strapazierfähiges Material umfasst und welche einen wärmedämmenden Kern (48) der nanoporösen Isolierschicht (46) ummantelt, wobei die Isolierschicht (46) ein partikelförmiges Aerogel umfasst.

2. Vorrichtung (3) zum Reparieren von Transportbändern (4) und/oder Verbinden von Transportbandenden nach Anspruch 1,
**dadurch gekennzeichnet, dass**
die nanoporöse Isolierschicht (46) ein aerogelenthaltendes Material umfasst.

3. Vorrichtung (3) zum Reparieren von Transportbändern (4) und/oder Verbinden von Transportbandenden nach Anspruch 2,
**dadurch gekennzeichnet, dass**
die nanoporöse Isolierschicht (46) ein aerogelenthaltendes Flies umfasst.

4. Vorrichtung (3) zum Reparieren von Transportbändern (4) und/oder Verbinden von Transportbandenden nach einem der vorangegangenen Ansprüche,
**dadurch gekennzeichnet; dass**
die Isolierschicht (47) einen hitzebeständigen Kunststoff umfasst.

5. Vorrichtung (3) zum Reparieren von Transportbändern (4) und/oder Verbinden von Transportbandenden nach einem der vorangegangenen Ansprüche,
**dadurch gekennzeichnet, dass**
die wärmeleitende Schicht aus einem wärmeleitfähigen Metall ist und Kanäle (41) und Anschlüsse (12) für eine Wasserkühlung aufweist.

6. Vorrichtung (3) zum Reparieren von Transportbändern (4) und/oder Verbinden von Transportbandenden nach einem der vorangegangenen Ansprüche,
**dadurch gekennzeichnet, dass**
die Heiz- und Kühleinrichtung (2) auf des Seite des zu vulkanisierenden Transportbandes (4) und/oder der zu vulkanisierenden Transportbandenden, welche das Kühlelement (49), eine Dichtung (43), das Heizelement (15) und die nanoporöse Isolierschicht (46) umfasst, eine Dicke von weniger als 50mm, bevorzugt weniger als 30mm, besonders bevorzugt weniger als 25mm aufweist.

7. Vorrichtung (3) zum Reparieren von Transportbändern (4) und/oder Verbinden von Transportbandenden nach Anspruch 5 oder 6,
**dadurch gekennzeichnet, dass**
eine Dichtung (43) aus einem thermisch belastbaren Fluorelastomer benachbart zu den Kanälen (41) angeordnet ist.

8. Vorrichtung (3) zum Reparieren von Transportbändern (4) und/oder Verbinden von Transportbandenden nach einem der vorangegangenen Ansprüche,
**dadurch gekennzeichnet, dass**
die Heiz- und Kühleinrichtung (2) mit Drücken von >10 bar, bevorzugt >15 bar, besonders bevorzugt >20 bar beaufschlagbar ist.

9. Vorrichtung (3) zum Reparieren von Transportbändern (4) und/oder Verbinden von Transportbandenden nach einem der vorangegangenen Ansprüche,
**dadurch gekennzeichnet, dass**
die Heiz- und Kühleinrichtung (2) an einer Kontaktstelle zu dem Transportband (4) und/oder den Transportbandenden auf eine Temperatur >150°C, bevorzugt >180°C, besonders bevorzugt >200°C beheizbar ist.

10. Vorrichtung (3) zum Reparieren von Transportbändern (4) und/oder Verbinden von Transportbandenden nach einem der vorangegangenen Ansprüche,
**dadurch gekennzeichnet, dass**
die Vorrichtung (3) mindestens zum Reparieren und/oder Verbinden von einlagigen Textilgurten, mehrlagigen Textilgurten und/oder Stahlseilgurten geeignet ist.

11. Verfahren zum Reparieren von Transportbändern (4) und/oder Verbinden von Transportbandenden unter Verwendung einer Vorrichtung (3) nach einem der vorangegangenen Ansprüche, wobei eine Heiz- und Kühleinrichtung (2) aus mehreren Schichten parallel zu dem Transportband (4) und/oder den Transportbandenden angeordnet wird,
**dadurch gekennzeichnet, dass**
die Heiz- und Kühleinrichtung (2) eine nanoporöse Isolierschicht (46) mit einem wärmedämmenden Kern (48) und einer dieser ummantelnden Isolierschicht, deren äußerer Mantel (47) ein strapazierfähiges Material umfasst, aufweist, wobei die Isolierschicht (46) ein partikelförmiges Aerogel umfasst.

## Claims

1. Device (3) for repairing conveyor belts (4) and/or connecting conveyor belt ends by vulcanisation at increased pressure using a heating and cooling apparatus (2) which can be subjected to increased pressure by means of pressure-applying elements, the heating and cooling apparatus (2) being constructed in layer-form from a plurality of layers and it being possible for the conveyor belt (4) or the conveyor belt ends to be arranged parallel to the layers in the width direction and the heating and cooling apparatus (2) comprising, on at least one side of the conveyor belt (4) to be vulcanised and/or of the conveyor belt ends to be vulcanised, at least one heat-conducting layer having a cooling element (49) and a heating element (15), **characterised in that** the heating and cooling apparatus (2) comprises, on at least one side of the conveyor belt (4) to be vulcanised and/or of the conveyor belt ends to be vulcanised, at least one nanoporous insulating layer (46), the heating and cooling apparatus (2), which is constructed in layer-form, further comprises an insulating layer, the outer casing (47) of which comprises a durable material and which insulating layer encases a heat-insulating core (48) of the nanoporous insulating layer (46), the insulating layer (46) comprising a particulate aerogel.

2. Device (3) for repairing conveyor belts (4) and/or connecting conveyor belt ends according to claim 1, **characterised in that** the nanoporous insulating layer (46) comprises an aerogel-containing material.

3. Device (3) for repairing conveyor belts (4) and/or connecting conveyor belt ends according to claim 2, **characterised in that** the nanoporous insulating layer (46) comprises an aerogel-containing non-woven material.

4. Device (3) for repairing conveyor belts (4) and/or connecting conveyor belt ends according to any of the preceding claims, **characterised in that** the insulating layer (47) comprises a heat-resistant plastics material.

5. Device (3) for repairing conveyor belts (4) and/or connecting conveyor belt ends according to any of the preceding claims, **characterised in that** the heat-conducting layer is made of a heat-conductive metal and has ducts (41) and connections (12) for cooling water.

6. Device (3) for repairing conveyor belts (4) and/or connecting conveyor belt ends according to any of the preceding claims, **characterised in that**, on the side of the conveyor belt (4) to be vulcanised and/or of the conveyor belt ends to be vulcanised that comprises the cooling element (49), a seal (43), the heating element (15) and the nanoporous insulating layer (46), the heating and cooling apparatus (2) has a thickness of less than 50 mm, preferably less than 30 mm, more preferably less than 25 mm.

7. Device (3) for repairing conveyor belts (4) and/or connecting conveyor belt ends according to either claim 5 or claim 6, **characterised in that** a seal (43) made of a thermally resistant fluoroelastomer is arranged adjacent to the ducts (41).

8. Device (3) for repairing conveyor belts (4) and/or connecting conveyor belt ends according to any of the preceding claims, **characterised in that** the heating and cooling apparatus (2) can be pressurised by > 10 bar, preferably > 15 bar, more preferably > 20 bar.

9. Device (3) for repairing conveyor belts (4) and/or connecting conveyor belt ends according to any of the preceding claims, **characterised in that** the heating and cooling apparatus (2) can be heated, at a point of contact with the conveyor belt (4) and/or the conveyor belt ends, to a temperature of > 150 °C, preferably > 180 °C, more preferably > 200 °C.

10. Device (3) for repairing conveyor belts (4) and/or connecting conveyor belt ends according to any of the preceding claims, **characterised in that** the device (3) is at least suitable for repairing and/or connecting single-ply textile belts, multi-ply textile belts and/or steel cord belts.

11. Method for repairing conveyor belts (4) and/or connecting conveyor belt ends using a device (3) according to any of the preceding claims, a multi-layer heating and cooling apparatus (2) being arranged parallel to the conveyor belt (4) and/or to the conveyor belt ends, **characterised in that** the heating and cooling apparatus (2) comprises a nanoporous insulating layer (46) having a heat-insulating core (48) and an insulating layer which encases said core, the outer casing (47) of which insulating layer comprises a durable material, the insulating layer (46) comprising a particulate aerogel.

## Revendications

1. Dispositif (3) de réparation de bandes de convoyage (4) et/ou de liaison d'extrémités de bandes de convoyage par vulcanisation sous haute pression avec un dispositif de chauffage et de refroidissement (2), qui peut être exposé à une haute pression à l'aide d'éléments d'application de pression, le dispositif de chauffage et de refroidissement (2) étant constitué de plusieurs couches et la bande de convoyage (4) ou les extrémités de la bande de convoyage pouvant être disposée(s) dans le sens de la largeur parallèlement aux couches et le dispositif de chauffage et de refroidissement (2) comprenant, au moins sur un côté de la bande de convoyage (4) à vulcaniser et/ou des extrémités de la bande de convoyage à vulcaniser, au moins une couche thermo-conductrice avec un élément de refroidissement (49) et un élément chauffant (15), **caractérisé en ce que** le dispositif de chauffage et de refroidissement (2) comprend, au moins sur un côté de la bande de convoyage (4) à vulcaniser et/ou des extrémités de la bande de convoyage à vulcaniser, au moins une couche isolante nano-poreuse (46), le dispositif de chauffage et de refroidissement (2) à structure en couches comprend en outre une couche isolante dont le revêtement externe (47) comprend un matériau résistant et qui entoure un noyau (48) thermo-isolant de la couche isolante nano-poreuse (46), la couche isolante (46) comprenant un aérogel sous forme de particules.

2. Dispositif (3) de réparation de bandes de convoyage (4) et/ou de liaison d'extrémités de bandes de convoyage selon la revendication 1, **caractérisé en ce que** la couche isolante nano-poreuse (46) comprend un matériau contenant un aérogel.

3. Dispositif (3) de réparation de bandes de convoyage (4) et/ou de liaison d'extrémités de bandes de convoyage selon la revendication 2, **caractérisé en ce que** la couche isolante nano-poreuse (46) comprend un non-tissé contenant un aérogel.

4. Dispositif (3) de réparation de bandes de convoyage (4) et/ou de liaison d'extrémités de bandes de convoyage selon l'une des revendications précédentes, **caractérisé en ce que** la couche isolante (47) comprend une matière plastique résistante à la chaleur.

5. Dispositif (3) de réparation de bandes de convoyage (4) et/ou de liaison d'extrémités de bandes de convoyage selon l'une des revendications précédentes, **caractérisé en ce que** la couche thermo-conductrice est constituée d'un métal thermo-conducteur et comprend des canaux (41) et des branchements (12) pour un refroidissement par eau.

6. Dispositif (3) de réparation de bandes de convoyage (4) et/ou de liaison d'extrémités de bandes de convoyage selon l'une des revendications précédentes, **caractérisé en ce que** le dispositif de chauffage et de refroidissement (2) présente, sur le côté de la bande de convoyage (4) à vulcaniser et/ou des extrémités des bandes de convoyage à vulcaniser, qui comprend l'élément de refroidissement (49), un joint d'étanchéité (43), l'élément chauffant (15) et la couche isolante nano-poreuse (46), une épaisseur inférieure à 50 mm, de préférence inférieure à 30 mm, plus particulièrement de préférence inférieure à 25 mm.

7. Dispositif (3) de réparation de bandes de convoyage (4) et/ou de liaison d'extrémités de bandes de convoyage selon les revendications 5 ou 6, **caractérisé en ce qu'** un joint d'étanchéité (43) constitué d'un élastomère fluoré thermiquement résistant est disposé à proximité des canaux (41).

8. Dispositif (3) de réparation de bandes de convoyage (4) et/ou de liaison d'extrémités de bandes de convoyage selon l'une des revendications précédentes, **caractérisé en ce que** le dispositif de chauffage et de refroidissement (2) peut être exposé à des pressions > 10 bar, de préférence > 15 bar, plus particulièrement de préférence > 20 bar.

9. Dispositif (3) de réparation de bandes de convoyage (4) et/ou de liaison d'extrémités de bandes de convoyage selon l'une des revendications précédentes, **caractérisé en ce que** le dispositif de chauffage et de refroidissement (2) peut être chauffé au niveau d'un point de contact avec la bande de convoyage (4) et/ou les extrémités des bandes de convoyage à une température > 150°C, de préférence > 180°C, plus particulièrement de préférence > 200°C.

10. Dispositif (3) de réparation de bandes de convoyage (4) et/ou de liaison d'extrémités de bandes de convoyage selon l'une des revendications précédentes, **caractérisé en ce que** le dispositif (3) est adapté, au moins, à la réparation et/ou à la liaison de sangles textiles monocouches, de sangles textiles multicouches et/ou de sangles en câbles d'acier.

11. Procédé de réparation de bandes de convoyage (4) et/ou de liaison d'extrémités de bandes de convoyage à l'aide d'un dispositif (3) selon l'une des revendications précédentes, un dispositif de chauffage et de refroidissement (2) constitué de plusieurs couches étant disposé parallèlement à la bande de convoyage (4) et/ou aux extrémités des bandes de convoyage, **caractérisé en ce que** le dispositif de chauffage et de refroidissement (2) comprend une couche isolante nano-poreuse (46) avec un noyau (48) thermo-isolant et une couche isolante entourant celui-ci, dont le revêtement externe (47) contient un matériau résistant, la couche isolante (46) contenant un aérogel sous forme de particules.
